# EUROPÄISCHE PATENTSCHRIFT

(11) **EP 2 817 543 B1**
(45) Veröffentlichungstag und Bekanntmachung des Hinweises auf die Patenterteilung: **25.04.2018**
(21) Anmeldenummer: 13710295.0
(22) Anmeldetag: 11.03.2013
(51) Int. Cl.: F16K 7/12, F16K 31/06

(54) **MEMBRANVENTIL**
DIAPHRAGM VALVE
SOUPAPE À DIAPHRAGME

(30) Priorität: 14.03.2012 DE 102012005093
(43) Veröffentlichungstag der Anmeldung: 31.12.2014
(73) Patentinhaber: Festo AG & Co. KG, 73734 Esslingen (DE)
(72) Erfinder: BÜHLER, Andreas, 70372 Stuttgart (DE)
(74) Vertreter: Patentanwälte Magenbauer & Kollegen Partnerschaft mbB
(86) Internationale Anmeldenummer: PCT/EP2013/000715
(87) Internationale Veröffentlichungsnummer: WO 2013/135366

(56) Entgegenhaltungen:
- WO-A1-99/35437
- DE-C1- 10 143 887
- DE-U1-202009 016 447
- US-A- 6 003 552
- US-A1- 2006 289 824
- US-B2- 6 789 781

## Beschreibung

Die Erfindung betrifft ein Membranventil, mit einem Ventilgehäuse und mindestens einem diesbezüglich beweglichen Ventilglied, wobei das Ventilglied über einen unter Ausführung einer Umschaltbewegung relativ zum Ventilgehäuse bewegbaren Membranträger und über eine gemeinsam mit dem Ventilgehäuse eine Ventilkammer begrenzende flexible Dichtmembran verfügt, wobei die Dichtmembran an ihrem äußeren Randbereich unter Abdichtung an dem Ventilgehäuse fixiert ist und einen mit Abstand dazu an dem Membranträger befestigten und dessen Umschaltbewegung mitmachenden Befestigungs-Membranabschnitt aufweist, wobei in der Ventilkammer ein der Dichtmembran zugewandter Ventilsitz angeordnet ist, an den ein zumindest partiell von einer der Ventilkammer zugewandten Grundfläche des Membranträgers abgestützter Dichtabschnitt der Dichtmembran dichtend andrückbar ist, um wenigstens zwei in die Ventilkammer einmündende Fluidkanäle voneinander abzutrennen, wobei das Membranventil einen Membrankörper enthält, der funktionell in zwei Dichtmembranen eingeteilt ist, die jeweils mit einem eigenen Membranträger verbunden sind und die mit jeweils einem eigenen Ventilsitz kooperieren können, wobei die beiden Membranträger stößelartig ausgebildet und unter Ausführung einer linearen Umschaltbewegung parallel zueinander linear bewegbar sind und wobei die beiden Membranträger außerdem mittels eines wippenartig verschwenkbaren Betätigungshebels derart antriebsmäßig miteinander gekoppelt sind, dass sich der eine Membranträger an den ihm zugeordneten Ventilsitz annähert, wenn der andere Membranträger von dem ihm zugeordneten Ventilsitz abgehoben wird, wobei der Betätigungshebel durch elektrisch betätigbare Antriebsmittel des Membranventils zu einer hin- und hergehenden Schwenkbewegung antreibbar ist und über zwei Antriebsarme verfügt, die mit jeweils einem der beiden Membranträger kooperieren, sodass die Schwenkbewegung des Betätigungshebels in die lineare Umschaltbewegung der beiden Membranträger umgewandelt wird. Ein aus der EP 1 722 137 A2 bekanntes Membranventil enthält mindestens ein in einem Ventilgehäuse angeordnetes Ventilglied bestehend aus einer eine Ventilkammer begrenzenden Dichtmembran und einem die Dichtmembran tragenden, nach Art eines Stößels ausgebildeten Membranträger, der relativ zum Ventilgehäuse linear bewegbar ist. Der Membranträger stützt mit seiner Grundfläche einen ringförmigen Dichtabschnitt der Dichtmembran ab, der an einem in der Ventilkammer angeordneten ringförmigen Ventilsitz zur Anlage bringbar ist, um zwei in die Ventilkammer einmündende Fluidkanäle voneinander abzutrennen. Der Dichtabschnitt ist Bestandteil eines an dem Ventilglied fixierten Membranabschnittes, der als Befestigungs-Membranabschnitt bezeichnet sei und der die Umschaltbewegung des Membranträgers mitmacht. An ihrem äußeren Randbereich ist die Dichtmembran unter Abdichtung am Ventilgehäuse eingespannt. Ein Nachteil des bekannten Membranventils ist darin zu sehen, dass die Dichtmembran beim Umschalten des Ventilgliedes zeitweilig stark gedehnt wird und somit einer hohen Beanspruchung unterliegt, was sich nachteilig auf die Lebensdauer auswirken kann.

Aus der DE 20023225 U1 ist ein Membranventil mit vergleichbarem Aufbau bekannt, das über zwei Ventilglieder verfügt, die jeweils einen stößelartig ausgebildeten Membranträger und eine an dem Membranträger befestigte, mit einem Ventilsitz kooperierende Dichtmembran enthalten, wobei die Dichtmembranen einstückig in einem Membrankörper zusammengefasst sind.

Die DE 60017310 T2 offenbart ein Membranventil mit einem Ventilgehäuse, das einen eine Dichtmembran tragenden, schwenkbeweglich an einem Ventilgehäuse aufgehängten Membranträger aufweist. Der Membranträger stützt mit seiner Grundfläche zwei Dichtabschnitte der Dichtmembran ab, die mit jeweils einem eigenen Ventilsitz zusammenwirken können, um insgesamt drei in eine Ventilkammer einmündende Fluidkanäle wahlweise miteinander zu verbinden oder voneinander abzutrennen. Die Schaltstellung des Ventilträgers kann durch Antriebsmittel vorgegeben werden, die auf den Membranträger einwirken und dessen schwenkende Umschaltbewegung hervorrufen. Auch bei diesem Membranventil tritt das Problem auf, dass die flexible Dichtmembran vor allem in dem sich zwischen dem Membranträger und dem fixierten Randbereich erstreckenden Membranabschnitt stark gedehnt wird und hohen Zugspannungen ausgesetzt ist.

Bei einem aus der DE 20 2009 016 447 U1 bekannten Membranventil ist eine Dichtmembran lediglich im Bereich zweier jeweils einem Ventilsitz gegenüberliegender Dichtabschnitte an einem verschwenkbaren Membranträger befestigt. Die Problematik einer aufgrund ihrer Dehnung stark beanspruchten Dichtmembran ist auch bei diesem Membranventil gegeben. Gleiches gilt für das in der DE 20 2009 000 593 U1 beschriebene Membranventil, dessen Membranträger nach Art einer Wippe verschwenkbar ist, um die Schaltstellung des Ventils zu verändern.

Ein aus der DE 7324333 U bekanntes Membranventil verfügt über eine eine Ventilkammer verschließende Dichtmembran, die durch ein Versteifungsblech festgehalten wird. Von der Dichtmembran wegragende Vorsprünge durchsetzen das Versteifungsblech und stützen sich an einem unabhängig von der Dichtmembran in einem Ventilgehäuse schwenkbeweglich angeordneten Betätigungselement ab. An der Schwenkbewegung des Membranträgers nimmt die Dichtmembran nicht teil, was den zur Verfügung stehenden Ventilhub beeinträchtigt.

Die FR 2795798 A offenbart ein Membranventil, dessen Ventilglied einen schwenkbeweglichen Membranträger und einen an dem Membranträger befestigten Membrankörper aufweist, wobei der Membrankörper eine Dichtmembran bildet, die randseitig im Ventilgehäuse unter Abdichtung fixiert ist. Beim Verschwenken des Membranträgers unterliegt ein den Membranträger umrahmender Membranabschnitt der Dichtmembran einer hohen Zugbeanspruchung, was die Lebensdauer beeinträchtigen kann.

Weitere Bauarten von Membranventilen sind aus US6003552, US 6 789 781 B2, WO 2004/005778 A1, GB 596533 A, DE 102005021583 A1 und US 7 779 867 B2 bekannt, wobei aus US6003552 ein Membranventil mit den Merkmalen des Oberbegriffs des Anspruchs 1 hervorgeht.
Der Erfindung liegt die Aufgabe zugrunde, ein Membranventil zu schaffen, dessen Dichtmembran zu Gunsten einer hohen Lebensdauer einer geringen Beanspruchung unterliegt.
Zur Lösung dieser Aufgabe ist in Verbindung mit den eingangs genannten Merkmalen vorgesehen, dass der Dichtabschnitt zumindest partiell Bestandteil eines losen Membranabschnittes der Dichtmembran ist, der sich, ohne am Membranträger befestigt zu sein, ausgehend von dem Befestigungs -Membranabschnitt bis zu dem am Ventilgehäuse fixierten äußeren Randbereich der Dichtmembran erstreckt, so dass er von der Grundfläche des Membranträgers abhebt, wenn der Membranträger sich bei seiner Umschaltbewegung von dem Ventilsitz entfernt. Auf diese Weise wird zum Abtrennen der Fluidverbindung zweier Fluidkanäle weiterhin ein Dichtabschnitt der Dichtmembran durch den die Dichtmembran tragenden Membranträger unter Abdichtung an einen zugeordneten Ventilsitz angedrückt. Dadurch ist auch bei einem hohen Fluiddruck einem unerwünschten Abheben des Dichtabschnittes vom Ventilsitz entgegengewirkt und für eine hohe Abdichtqualität gesorgt. Gleichwohl unterliegt die Dichtmembran selbst dann nur einer geringen Dehnung, wenn der Dichtabschnitt durch entsprechende Umschaltbewegung des Membranträgers vom zugeordneten Ventilsitz abgehoben wird. Ursache dafür ist, dass zumindest ein Teilbereich des Dichtabschnittes zu einem Membranabschnitt der Dichtmembran gehört, der sich zwischen dem Befestigungs-Membranabschnitt und dem am Ventilgehäuse fixierten äußeren Randbereich der Dichtmembran in am Membranträger nicht befestigter Weise erstreckt und deshalb in der Lage ist, sich von der Grundfläche des Membranträgers zu lösen, wenn sich der Membranträger bei seiner Umschaltbewegung vom zugeordneten Ventilsitz entfernt. Dieser nicht fixierte Membranabschnitt wird als loser Membranabschnitt bezeichnet. Während der Dichtabschnitt also zum fluiddichten Zusammenwirken mit dem Ventilsitz durch den Membranträger mechanisch abstützbar ist, hat zumindest ein Teilbereich des Dichtabschnittes die Möglichkeit, von der zuvor noch an ihm anliegenden Grundfläche des Membranträgers abzuheben beziehungsweise sich von dieser Grundfläche abzulösen, wenn der Membranträger zum Zwecke des Freigebens einer Fluidverbindung im Sinne eines sich von dem Ventilsitz Entfernens bewegt wird. Es kann sich hier insbesondere ein Verhaltensmuster ergeben, das man mit einem Abklappen beziehungsweise mit einem Wegklappen des losen Membranabschnittes vom Membranträger beschreiben könnte. Es kann sich dabei insbesondere ein zum Rand der Grundfläche hin keilförmig erweiternder Spalt zwischen dem losen Membranabschnitt und dem Membranträger auftun. Da die Dichtmembran in den vom Membranträger abhebbaren Bereichen nicht gezwungen ist, die Umschaltbewegung des Membranträgers in vollem Umfang mitzumachen, unterliegt sie einer verhältnismäßig geringen Dehnungsbeanspruchung. Die Folge ist eine hohe Lebensdauer des Membranventils verbunden mit der Möglichkeit, das Membranventil mit kompakten Abmessungen zu realisieren. Dadurch, dass sich ein zumindest einen Teil des Dichtabschnittes enthaltender Bestandteil der Dichtmembran vom Membranträger ablösen kann, ist die Voraussetzung geschaffen, eine Dichtmembran einzusetzen, die neben dem Membranträger keines besonderen Verformungsfreiraumes im Ventilgehäuse bedarf.
Das Membranventil ist mit elektrisch betätigbaren Antriebsmitteln ausgestattet, die zur Betätigung des Ventilgliedes dienen und die es ermöglichen, die Membranträger nach Bedarf zu ihrer Umschaltbewegung anzutreiben und in der jeweils gewünschten Position auch festzuhalten. Derartige Antriebsmittel enthalten vorzugsweise mindestens eine Elektromagneteinrichtung und vorzugsweise auch mindestens eine eine gewünschte Grundstellung vorgebende Rückstellfedereinrichtung. Vorteilhafte Weiterbildungen der Erfindung gehen aus den Unteransprüchen hervor. Die Umschaltbewegung des Membranträges ist eine Linearbewegung. Ein solcher Membranträger ist stößelartig ausgebildet und verfügt insbesondere über eine der Dichtmembran zugewandte axiale Stirnfläche, die die zur Abstützung des Dichtabschnittes dienende Grundfläche bildet.

Vorzugsweise ist die Dichtmembran mit ihrem Befestigungs-Membranabschnitt derart im Bereich der Grundfläche des Membranträgers befestigt, dass rings um den Befestigungs-Membranabschnitt ein radialer Abstand zwischen diesem Befestigungs-Membranabschnitt und dem Umriss der Grundfläche des Membranträgers vorliegt. Der sich zwischen dem Befestigungs-Membranabschnitt und dem Umriss der Grundfläche befindliche Bereich der Dichtmembran ist ein Bestandteil des losen Membranabschnittes. Der Befestigungs-Membranabschnitt ist insbesondere mittig im Bereich der Grundfläche angeordnet. Besonders zweckmäßig ist eine Ausgestaltung, bei der der lose Membranabschnitt den Befestigungs-Membranabschnitt in einem Bereich, der der Grundfläche vorgelagert ist, ringsum umrahmt. Auf diese Weise ergibt sich insbesondere ein ringförmiger Bereich des losen Membranabschnittes, der bei der Umschaltbewegung des Membranträgers relativ zum Membranträger beweglich ist, um nicht gezwungen zu sein, der Umschaltbewegung des Membranträgers in vollem Umfang zu folgen und dadurch einer hohen Dehnungsbelastung ausgesetzt zu sein.

In einer bevorzugten Ausgestaltung ist der Ventilsitz des Membranventils ringförmig in sich geschlossen ausgebildet, so dass er die Kanalmündung eines Fluidkanals umrahmt. Zum Absperren dieses Fluidkanals liegt mithin ein ebenfalls ringförmiger Dichtabschnitt der Dichtmembran an dem Ventilsitz an. Von diesem ringförmigen Dichtabschnitt ist zumindest ein Teilbereich als Bestandteil des losen Membranabschnittes ausgebildet, so dass er vom Membranträger abheben kann, wenn selbiger zum Freigeben des Fluidkanals von dem Ventilsitz wegbewegt wird.

Vorzugsweise ist die Dichtmembran so ausgebildet, dass ein mit einem ringförmigen Ventilsitz kooperierender ringförmiger Dichtabschnitt in seiner Gesamtheit ein Bestandteil des losen Membranabschnittes ist, so dass er zur Gänze von der Grundfläche des Membranträgers abheben kann, wenn sich der Membranträger bei der Umschaltbewegung von dem Ventilsitz entfernt. Grundsätzlich ist allerdings auch eine Bauform möglich, bei der der mit dem Ventilsitz kooperierende Dichtabschnitt teilweise ein Bestandteil des Befestigungs-Membranabschnittes und nur teilweise ein Bestandteil des losen Membranabschnittes ist.

In einer Draufsicht auf die Grundfläche des Membranträgers betrachtet, liegt der Dichtabschnitt zweckmäßigerweise vollständig innerhalb des äußeren Umrisses der Grundfläche des Membranträgers.

Bei einer ebenfalls vorteilhaften Ausgestaltung des Membranventils ist der Ventilsitz stegartig ausgebildet und erstreckt sich derart zwischen zwei sich gegenüberliegenden seitlichen Wandabschnitten der Ventilkammer, dass er diese Ventilkammer in zwei diesseits und jenseits des stegartigen Ventilsitzes liegende Kammerabschnitte unterteilt. Der in diesem Fall streifenförmig ausgebildete Dichtabschnitt gehört zumindest teilweise zu dem losen Membranabschnitt. Insbesondere ist eine Bauform vorgesehen, bei der der Dichtabschnitt teilweise von dem Befestigungs-Membranabschnitt gebildet ist, so dass er nur partiell von der Grundfläche des Membranträgers abheben kann. Der Dichtabschnitt hat zweckmäßigerweise zwei von dem Membranträger abhebbare Bereiche, die den Befestigungs-Membranabschnitt auf entgegengesetzten Seiten flankieren.

Vorzugsweise ist die Dichtmembran im Bereich des Befestigungs-Membranabschnittes ausschließlich im Innern des Membranträgers befestigt. Insbesondere in diesem Zusammenhang ist es von Vorteil, wenn die Dichtmembran Bestandteil eines einstückigen Membrankörpers ist, der im Bereich des Befestigungs-Membranabschnittes mindestens einen und vorzugsweise genau einen ausgehend von der Grundfläche in den Membranträger eingreifenden Befestigungsfortsatz aufweist. Dort, wo der Befestigungsfortsatz in den Membranträger eingreift, weist die Grundfläche eine Öffnung auf, wobei die Grundfläche insbesondere ringförmig und vorzugsweise kreisringförmig gestaltet ist.

Die Befestigung der Dichtmembran im Innern des Membranträgers erfolgt insbesondere ausschließlich auf der Grundlage von Formschluss und/oder Kraftschluss. Beispielsweise kann ein Membrankörper bei seiner Herstellung im Rahmen eines Spritzgießverfahrens an den Membranträger angeformt werden, wobei ein in den Membranträger eingreifender Befestigungsfortsatz ausgebildet wird. Es besteht allerdings ohne weiteres die Möglichkeit, den Befestigungs-Membranabschnitt alternativ oder zusätzlich durch Stoffschluss am Membranträger zu fixieren, beispielsweise im Rahmen einer Klebeverbindung.

Die Dichtmembran ist vorzugsweise so gestaltet, dass sie entlang des äußeren Umrisses der Grundfläche des Membranträgers ringsum über den Membranträger hinausragt und einen die Grundfläche außen umrahmenden Membran-Außenabschnitt aufweist, der in den am Ventilgehäuse unter Abdichtung fixierten äußeren Randbereich übergeht. Dieser Membran-Außenabschnitt ist zweckmäßigerweise an seiner der Ventilkammer abgewandten Oberseite von einer Abstützwand des Ventilgehäuses abgedeckt, so dass er auch hohen in der Ventilkammer herrschenden Fluiddrücken standhalten kann. Die Abstützwand hat zweckmäßigerweise eine Durchbrechung, durch die der Membranträger in einer die Umschaltbewegung gestattenden Weise hindurchragt, wobei der Vorteil besteht, dass das Spaltmaß zwischen dem Membranträger und der Abstützwand sehr gering gehalten werden kann.

Die Ventilkammer und die die Ventilkammer verschließende Dichtmembran haben insbesondere eine Längsgestalt mit schmalseitig abgerundetem Umriss oder verfügen zweckmäßigerweise über einen runden Umriss. In der Ventilkammer sind die vorhandenen Kanalmündungen der einmündenden Fluidkanäle vorzugsweise nebeneinander angeordnet, wobei sie bei einer länglichen Ventilkammer insbesondere in der Längsrichtung dieser Ventilkammer mit Abstand aufeinanderfolgend angeordnet sind.

Nachfolgend wird die Erfindung anhand der beiliegenden Zeichnung näher erläutert. In dieser zeigen:
- Figur 1: einen Längsschnitt durch eine Ausführungsform eines nicht erfindungsgemäßen Membranventils gemäß Schnittlinie I-I aus Figuren 2 und 3, das über einen stegartigen Ventilsitz verfügt, wobei eine Schließstellung gezeigt ist,
- Figur 2: das Membranventil aus Figur 1 in einem bezüglich Figur 1 um 90° verdrehten Längsschnitt gemäß Schnittlinie II-II aus Figuren 1 und 3,
- Figur 3: einen Querschnitt durch das Membranventil gemäß Schnittlinie III-III aus Figur 1,
- Figur 4: das Membranventil der Figuren 1 bis 3 in einer Offenstellung und in einer der Figur 1 entsprechenden Längsschnittdarstellung gemäß Schnittlinie IV-IV aus Figur 5,
- Figur 5: das die Offenstellung einnehmende Membranventil in einem Längsschnitt gemäß Schnittlinie V-V aus Figur 4,
- Figur 6: den in Figur 5 illustrierten Längsschnitt mit einer isometrischen Perspektive,
- Figur 7: eine weitere Ausführungsform eines nicht erfindungsgemäßen Membranventils, dessen Ventilsitz ringförmig ausgebildet ist, wobei in einem Längsschnitt gemäß Schnittlinie VII-VII aus Figuren 8 und 9 eine Schließstellung gezeigt ist,
- Figur 8: das Membranventil aus Figur 7 in einem um 90° verdrehten Längsschnitt gemäß Schnittlinie VIII-VIII aus Figuren 7 und 9,
- Figur 9: einen Querschnitt durch das Membranventil der Figuren 7 und 8 gemäß Schnittlinie IX-IX aus Figur 7,
- Figur 10: das Membranventil der Figuren 7 bis 9 in einer Offenstellung und in einem der Figur 7 entsprechenden Längsschnitt gemäß Schnittlinie X-X aus Figur 11,
- Figur 11: in einem Längsschnitt gemäß Schnittlinie XI-XI das Membranventil der Figuren 7 bis 10, wobei strichpunktiert eine bevorzugte Ausführungsform elektrisch betätigbarer Antriebsmittel für das Ventilglied illustriert ist, und
- Figur 12: eine Ausführungsform des erfindungsgemäßen Membranventils, das über zwei ringförmig ausgebildete Ventilsitze verfügt, in einer Schnittdarstellung analog zu Figur 7.

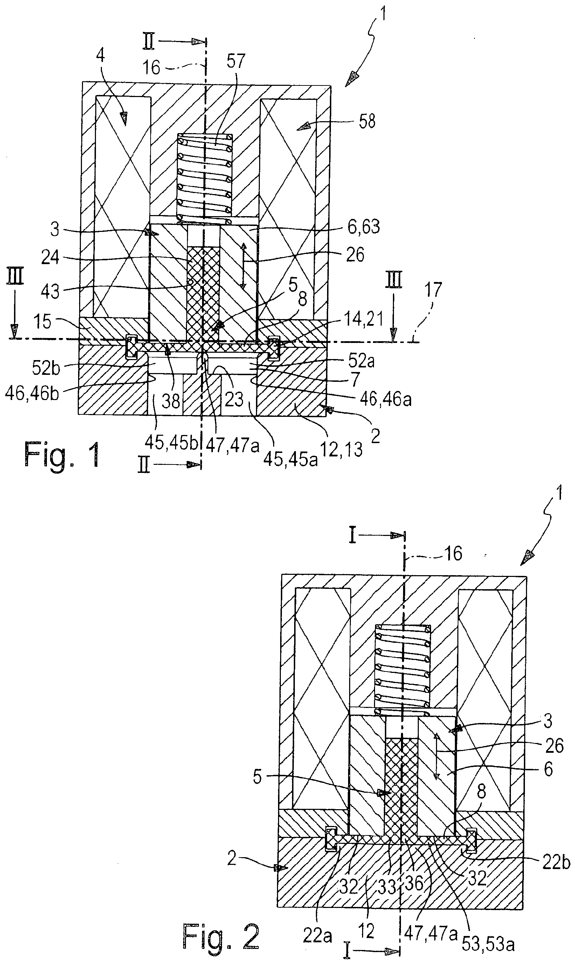

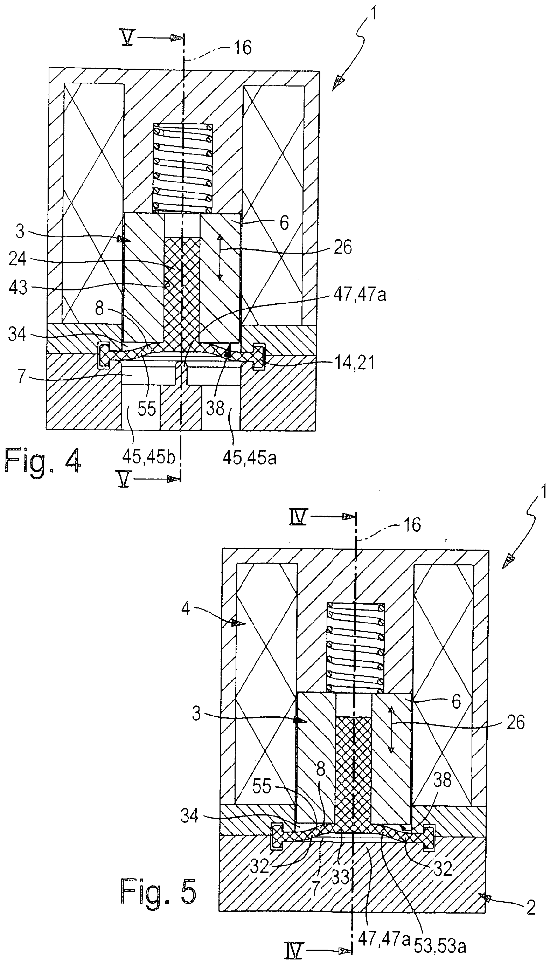

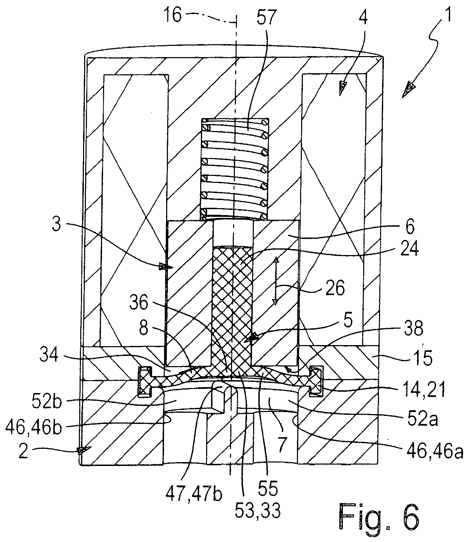

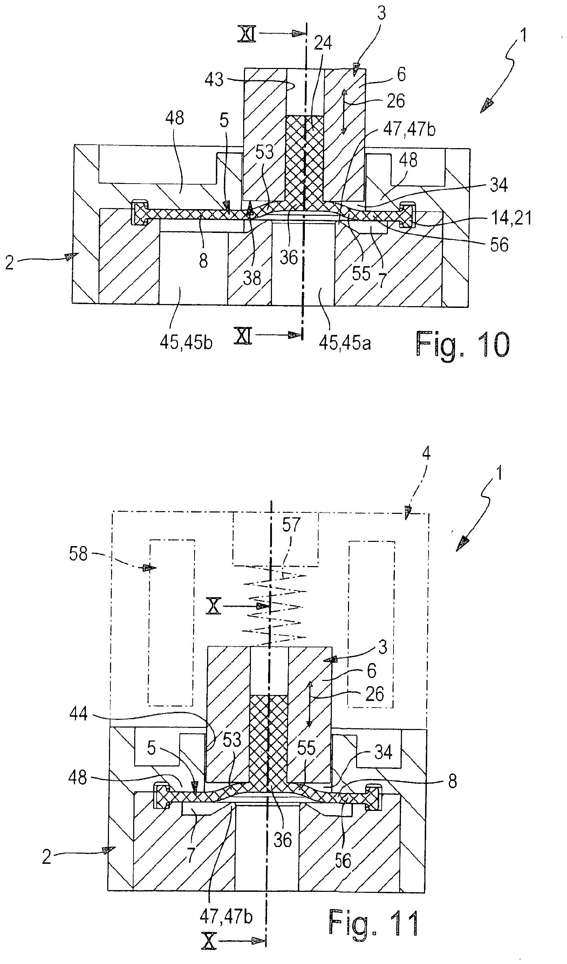

Das in seiner Gesamtheit mit Bezugsziffer 1 bezeichnete Membranventil verfügt bei allen Ausführungsbeispielen über ein Ventilgehäuse 2 und ein in dem Ventilgehäuse 2 angeordnetes, relativ zum Ventilgehäuse 2 bewegliches Ventilglied 3. Darüber hinaus ist das Membranventil 1 mit bevorzugt im Innern des Ventilgehäuses 2 untergebrachten, elektrisch betätigbaren Antriebsmitteln 4 ausgestattet, durch die das Ventilglied 3 zwischen zwei möglichen Schaltstellung umschaltbar ist. Die Figuren 1 und 2 sowie 7 und 8 zeigen jeweils eine erste Schaltstellung, bei der es sich um eine Schließstellung handelt. Die Figuren 4 bis 6 sowie 10 und 11 zeigen jeweils eine zweite Schaltstellung, bei der es sich exemplarisch um eine Offenstellung handelt.

Das Ventilglied 3 ist bevorzugt als Verbundelement ausgebildet, das sich aus einem Membrankörper 5 und mindestens einem den Membrankörper 5 tragenden Membranträger 6 zusammensetzt. Diese Komponenten sind in einer noch zu erläuternden Weise aneinander befestigt. Während der Membranträger 6 aus einem starren Material besteht, beispielsweise aus einem starren Kunststoffmaterial oder aus Metall, besteht der Membrankörper 5 aus einem flexiblen und vorzugsweise gummielastischen Material. Vorzugsweise handelt es sich bei dem Membrankörper 5 um einen Elastomerkörper.

Im Innern des Ventilgehäuses 2 befindet sich ein eine Ventilkammer 7 bildender Hohlraum. Die Ventilkammer 7 ist einerseits vom Ventilgehäuse 2 und andererseits von einem als Dichtmembran 8 bezeichneten membranartigen Bestandteil des Membrankörpers 5 begrenzt.

Das Ventilgehäuse 2 definiert eine die Ventilkammer 7 an einer Unterseite begrenzende Bodenwand 12. Die Bodenwand 12 ist bevorzugt Bestandteil eines ersten Gehäuseteils 13 des Ventilgehäuses 2.

Die Dichtmembran 8 hat flächenhafte Ausdehnung und erstreckt sich an einer Oberseite über die Bodenwand 12 hinweg. Mit einem den äußeren Umriss der Dichtmembran 8 definierenden äußeren Randbereich 14 ist die Dichtmembran 8 derart unter Abdichtung am Ventilgehäuse 2 fixiert, dass sie gemeinsam mit der Bodenwand 12 die zur Umgebung hin abgedichtete Ventilkammer 7 begrenzt.

Die fluiddichte Fixierung des äußeren Randbereiches 14 wird zweckmäßigerweise dadurch realisiert, dass dieser äußere Randbereich 14 zwischen dem ersten Gehäuseteil 13 und einem zweiten Gehäuseteil 15 des Ventilgehäuses 2 fest eingespannt ist. An dem äußeren Randbereich 14 weist die Dichtmembran 8 in diesem Zusammenhang zweckmäßigerweise einen den äußeren Umriss der Dichtmembran 8 bestimmenden Befestigungswulst 21 auf. Dieser greift in je eine Ringnut ein, die einander gegenüberliegend an den einander zugewandten Flächen des ersten und zweiten Gehäuseteils 13, 15 ausgebildet sind.

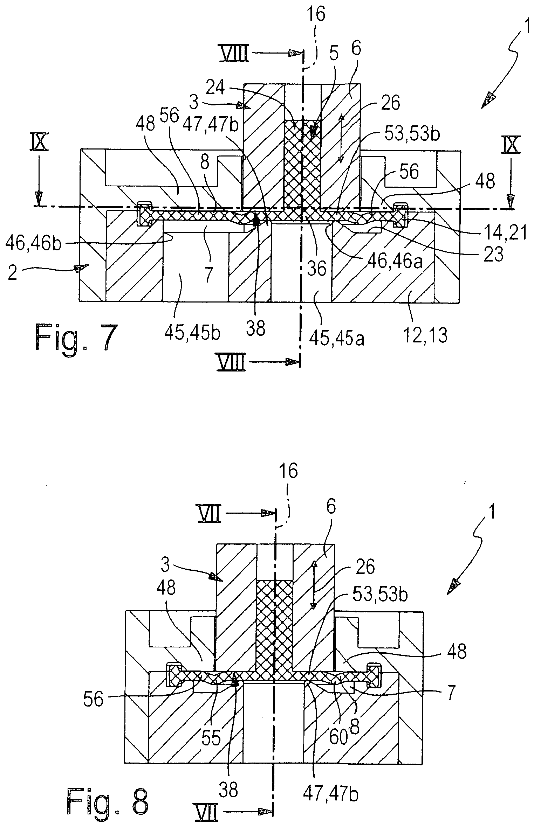

Im Folgenden sei die Richtung, in der die Dichtmembran 8 der Bodenwand 12 gegenüberliegt, als Höhenrichtung 16 bezeichnet. Rechtwinkelig zu der Höhenrichtung 16 hat die Ventilkammer 7 eine Hauptachse 17 und eine hierzu rechtwinkelige Querachse 18. Beim Ausführungsbeispiel der Figuren 7 bis 11 hat die Ventilkammer 7 bevorzugt eine längliche Gestalt, wobei die Hauptachse 17 die Längsachse bildet. Im Bereich der Schmalseiten ist die Ventilkammer 7 hier insbesondere abgerundet. Dass die Ventilkammer auch einen anderen Umriss haben kann, illustrieren die Figuren 1 bis 6. Bei diesem Ausführungsbeispiel hat die Ventilkammer 7, in der Höhenrichtung 16 betrachtet, einen kreisrunden Umriss. Die genannten Umrisse gelten in gleichem Maße für die jeweils zugeordnete Dichtmembran 8, wobei der Umriss der Dichtmembran 8 insbesondere durch den Verlauf des äußeren Randbereiches 14 bestimmt ist.

Seitlich ist jede Ventilkammer 7 von einer den oben erwähnten Umriss bestimmenden Seitenwand 22 begrenzt. Sie überragt nach oben hin eine der Dichtmembran 8 zugewandte Bodenfläche 23 der Ventilkammer 7, die an der Bodenwand 12 ausgebildet ist.

Der Membrankörper 5 verfügt über einen bevorzugt einstückig mit der Dichtmembran 8 ausgebildeten Befestigungsfortsatz 24, der in der Höhenrichtung 16 in Richtung zum Membranträger 6 wegragt. Mittels dieses Befestigungsfortsatzes 24 ist der Membrankörper 5 an dem Membranträger 6 befestigt. Beim Ausführungsbeispiel der Figuren 1 bis 6 befindet sich der Befestigungsfortsatz 24 im zentralen Bereich der Dichtmembran 8. Abweichend hiervon ist er beim Ausführungsbeispiel der Figuren 7 bis 11 in Achsrichtung der Hauptachse 17 außermittig an der Dichtmembran 8 angeordnet.

Der Membranträger 6 befindet sich auf der der Bodenwand 12 in der Höhenrichtung 16 entgegengesetzten Seite der Dichtmembran 8. Die Dichtmembran 8 liegt mithin in der Höhenrichtung 16 zwischen der Ventilkammer 7 und dem Membranträger 6.

Bei allen Ausführungsbeispielen ist der Membranträger 6 bezüglich des Ventilgehäuses 2 linear bewegbar gelagert. Die von dem Membranträger 6 ausführbare Bewegung sei im Folgenden als Umschaltbewegung 26 bezeichnet, weil sie sich unmittelbar auf die Schaltstellung des Ventilgliedes 3 auswirkt. Die Umschaltbewegung 26 ist bevorzugt eine Linearbewegung und verläuft bei den Ausführungsbeispielen in der Höhenrichtung 16. Dementsprechend ist der Membranträger 6 unter Ausführung einer linearen Umschaltbewegung 26 in der Höhenrichtung 16 hin und her bewegbar. Hierbei findet je nach Bewegungsrichtung eine Annäherung an die Bodenwand 12 oder ein Entfernen von der Bodenwand 12 seitens des Membranträgers 6 statt.

Ein Abschnitt der Dichtmembran 8 macht die Umschaltbewegung 26 des Membranträgers 6 uneingeschränkt mit. Es handelt sich hier um einen im Folgenden als Befestigungs-Membranabschnitt 36 bezeichneten Membranabschnitt der Dichtmembran 8, über den die Dichtmembran 8 an dem Membranträger 6 befestigt ist.

Den Ausführungsbeispielen ist gemeinsam, dass die Dichtmembran 8 im Bereich des Befestigungs-Membranabschnittes 36 ausschließlich im Innern des Membranträgers 6 befestigt ist. Hierzu ist der Befestigungsfortsatz 24 direkt an dem Befestigungs-Membranabschnitt 36 angeordnet und greift von der Seite einer der Dichtmembran 8 zugewandten Grundfläche 38 des Membranträgers 6 her in eine zu der Grundfläche 38 hin offene Befestigungsaussparung 43 des Membranträgers 6 hinein. Die Grundfläche 38 ist vorzugsweise eben und erstreckt sich insbesondere rechtwinkelig zu der Höhenrichtung 16 und/oder der Richtung der Umschaltbewegung 26.

Der Befestigungsfortsatz 24 ist in der Befestigungsaussparung 43 so fixiert, dass er die lineare Umschaltbewegung 26 des Membranträgers 6 direkt mitmacht. Dies gilt folglich auch für den direkt an dem Befestigungsfortsatz 24 angeordneten Befestigungs-Membranabschnitt 36, der außerhalb der Befestigungsaussparung 43 liegt. Bei beiden Ausführungsbeispielen ist der Befestigungs-Membranabschnitt 36 dem zentralen Bereich der Grundfläche 38 zugeordnet.

Die Dichtmembran 8 ist zweckmäßigerweise ausschließlich im Bereich des Befestigungs-Membranabschnittes 36 an dem Membranträger 6 gehalten. Genauer gesagt ergibt sich die feste Verbindung aus dem Zusammenwirken zwischen dem Innenumfang der Befestigungsaussparung 43 und dem in die Befestigungsaussparung 43 eintauchenden Befestigungsfortsatz 24. Zwischen diesen beiden Komponenten liegt bei den Ausführungsbeispielen eine stoffschlüssige Verbindung vor, die mittels eines in der Zeichnung nicht ersichtlichen Klebstoffes realisiert ist. Zusätzlich oder alternativ ist aber auch eine kraftschlüssige Verbindung möglich. Weiterhin kann die Befestigungsaussparung 43 auch so konturiert sein, dass sie zusätzlich oder alternativ mit dem Befestigungsfortsatz 24 eine in der Höhenrichtung 16 formschlüssige Verbindung eingeht. Letzteres ist beispielsweise dadurch realisierbar, dass die Befestigungsaussparung 43 über mindestens eine Verengung verfügt, die in einen eingeschnürten oder taillierten Umfangsbereich des Befestigungsfortsatzes 24 in bezüglich der Höhenrichtung 16 radialer Richtung eingreift oder eindrückt.

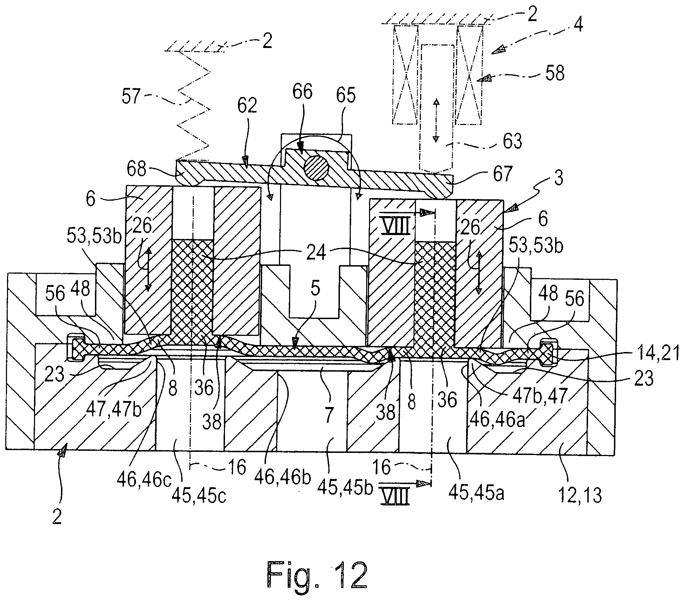

In die Ventilkammer 7 münden mehrere das Ventilgehäuse 2 durchsetzende Fluidkanäle 45 ein. Bei den Ausführungsbeispielen der Figuren 1 bis 11 handelt es sich um insgesamt zwei Fluidkanäle, da das Membranventil 1 hier als Absperrventil mit 2/2-Ventilfunktion eingesetzt wird. Soll ein Membranventil 1 mit höherer Ventilfunktionalität realisiert werden, beispielsweise mit einer 3/2-Ventilfunktion, münden in die Ventilkammer 7 mindestens drei und bevorzugt genau drei Fluidkanäle ein. Dies trifft für das Ausführungsbeispiel der Figur 12 zu.

Bei den Ausführungsbeispielen seien zwei Fluidkanäle 45 im Folgenden zur besseren Unterscheidung auch als erster und zweiter Fluidkanal 45a, 45b bezeichnet. Beide Fluidkanäle 45a, 45b durchsetzen zweckmäßigerweise die Bodenwand 12 und münden an der Bodenfläche 23 mit je einer Kanalmündung 46 in die Ventilkammer 7 ein. Zur besseren Unterscheidung seien auch hier die Kanalmündungen 46 als erste und zweite Kanalmündungen 46a, 46b bezeichnet.

Das Membranventil 1 kann bei den Ausführungsbeispielen der Figuren 1 bis 11 in Abhängigkeit von der Schaltstellung des Ventilgliedes 3 die beiden Fluidkanäle 45a, 45b entweder fluiddicht voneinander abtrennen oder, durch die Ventilkammer 7 hindurch, fluidisch miteinander verbinden. Letzteres geschieht in der oben schon erwähnten Offenstellung des Ventilgliedes 3. Zum Abtrennen der Fluidverbindung wird das Ventilglied 3 in die Schließstellung verlagert.

Um diese Ventilfunktion ausüben zu können, kooperiert das Ventilglied 3 mit einem ortsfest bezüglich des Ventilgehäuses 2 angeordneten Ventilsitz 47. Die illustrierten Membranventile 1 unterscheiden sich voneinander in der Struktur ihres Ventilsitzes 47. Der Ventilsitz 47 gemäß Ausführungsbeispiel der Figuren 1 bis 6 ist stegartig ausgebildet und sei daher im Folgenden auch als stegartiger Ventilsitz 47a bezeichnet. Jeder Ventilsitz 47 des Ausführungsbeispiels der Figuren 7 bis 11 und der Figur 12 ist ringförmig in sich geschlossen ausgebildet und sei daher im Folgenden auch als ringförmiger Ventilsitz 47b bezeichnet.

Der stegartige Ventilsitz 47a erstreckt sich in der Ventilkammer 7 quer zu der Höhenrichtung 16 zwischen sich insbesondere diametral gegenüberliegenden seitlichen Wandabschnitten 22a, 22b der Seitenwand 22. Auf diese Weise wird die Ventilkammer 7 durch den stegartigen Ventilsitz 47a in zwei Kammerabschnitte 52a, 52b unterteilt, in denen sich jeweils eine der beiden Kanalmündung 46a, 46b befindet. Bevorzugt hat der stegartige Ventilsitz 47a eine aus Figur 5 gut erkennbare lineare Längserstreckung.

Beim Ausführungsbeispiel der Figuren 7 bis 11 ist nur die erste Kanalmündung 46a von einem ringförmigen Ventilsitz 47b umrahmt, der bevorzugt kragenartig erhaben an der Bodenfläche 23 ausgebildet ist und ausgehend von dort in der Höhenrichtung 16 nach oben in Richtung zur Dichtmembran 8 ragt.

Die Dichtmembran 8 erstreckt sich bei allen Ausführungsbeispielen über den Ventilsitz 47 hinweg. Dabei verfügt sie in einem dem Ventilsitz 47 in der Höhenrichtung 16 gegenüberliegenden Bereich über einen Dichtabschnitt 53, der der Grundfläche 38 in der Höhenrichtung 16 vorgelagert ist und der bei Ausführung der Umschaltbewegung 26 je nach Bewegungsrichtung durch den Membranträger 6 an den zugeordneten Ventilsitz 47 fluiddicht andrückbar oder von dem Ventilsitz 47 abhebbar ist. In der Schließstellung des Ventilgliedes 3 liegt der Dichtabschnitt 53 dichtend am zugeordneten Ventilsitz 47 an, während er in der Offenstellung des Ventilgliedes 3 von diesem Ventilsitz 47 abgehoben ist.

Der Dichtabschnitt 53 ist derjenige Teilbereich der Dichtmembran 8, der am zugeordneten Ventilsitz 47 zur Anlage bringbar ist. Seine Gestalt entspricht daher derjenigen des Ventilsitzes 47. Dementsprechend handelt es sich bei dem Dichtabschnitt 53 der Figuren 1 bis 6 um einen streifenförmigen Dichtabschnitt 53a und bei den Ausführungsbeispielen der Figuren 7 bis 12 um einen ringförmigen Dichtabschnitt 53b. Jeder Dichtabschnitt 53 liegt dem Ventilsitz 47 in der Höhenrichtung 16 gegenüber.

Beim Ausführungsbeispiel der Figuren 7 bis 11 befindet sich der ringförmige Ventilsitz 47b zweckmäßigerweise zur Gänze innerhalb des äußeren Umrisses 54 der der Dichtmembran 8 zugewandten Grundfläche 38 des Membranträgers 6. Diese Grundfläche 38 ist bei beiden Ausführungsbeispielen von einer axial orientierten Stirnfläche des Membranträgers 6 gebildet, der vorzugsweise stößelartig ausgebildet ist. Auch bei einem stegartigen Ventilsitz 47a ist es gemäß Figuren 1 bis 6 von Vorteil, wenn der stegartige Ventilsitz 47a zumindest annähernd über seine gesamte Länge hinweg von der Grundfläche 38 des Membranträgers 6 überdeckt wird.

Der am Ventilgehäuse 2 fixierte äußere Randbereich 14 und der Befestigungs-Membranabschnitt 36 der Dichtmembran 8 sind quer zu der Höhenrichtung 16 mit Abstand zueinander angeordnet. Vorzugsweise umschließt der äußere Randbereich 14 den Befestigungs-Membranabschnitt 36 ringsum nach Art eines in sich geschlossenen Rahmens.

Die Dichtmembran 8 verfügt des Weiteren über einen besonderen Membranabschnitt, der im Folgenden als loser Membranabschnitt 55 bezeichnet sei. Dieser lose Membranabschnitt 55 erstreckt sich zwischen dem Befestigungs-Membranabschnitt 36 und dem äußeren Randbereich 14, wobei er an dem Membranträger 6 - abgesehen über den Befestigungs-Membranabschnitt 36 - nicht befestigt ist und der Grundfläche 38 lose vorgelagert ist. Die einzige, eine Fixierung bewirkende Verbindung zwischen der Dichtmembran 8 und dem Membranträger 6 ergibt sich also durch den Befestigungs-Membranabschnitt 36. Während dieser Befestigungs-Membranabschnitt 36 die Umschaltbewegung des Membranträgers 6 direkt mitmacht, ist der lose Membranabschnitt 55 in der Lage, von der Grundfläche 38 abzuheben, wenn sich der Membranträger 6 aus der Schließstellung in die Offenstellung bewegt und sich dabei vom Ventilsitz 47 entfernt. Der Dichtabschnitt 53 gehört zumindest zum Teil zu dem losen Membranabschnitt 55. Mithin ist auch der Dichtabschnitt 53 zumindest partiell von der Grundfläche 38 in der Richtung der Umschaltbewegung 26 abhebbar. Für den zum losen Membranabschnitt 55 gehörenden Bestandteil des Dichtabschnittes 53, der im Folgenden auch als unfixierter Bestandteil 32 des Dichtabschnittes 53 bezeichnet wird, gilt mithin, dass er in der Schließstellung des Ventilgliedes 3 von der Grundfläche 38 des Membranträgers 6 abgestützt und an den Ventilsitz 47 angedrückt wird, während er in der Offenstellung des Ventilgliedes 3 sowohl vom Ventilsitz 47 als auch in vorteilhafter Weise von der Grundfläche 38 des Membranträgers 6 abgehoben ist.

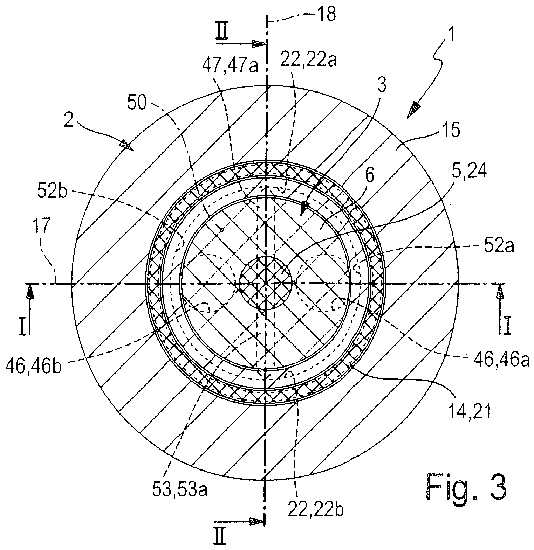

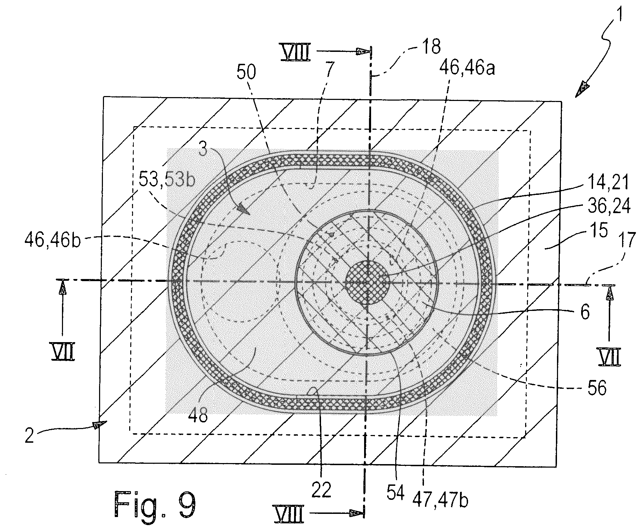

In den Figuren 3 und 9 ist mit einer strichpunktierten Schraffur 50 der innerhalb des Umrisses 54 der Grundfläche 38 liegende Teilbereich des losen Membranabschnittes 55 kenntlich gemacht, der der Grundfläche 38 in der Höhenrichtung 16 vorgelagert ist und den Befestigungs-Membranabschnitt 36, bevorzugt in koaxialer Weise, umrahmt. Hier ist auch gut zu erkennen, dass der Befestigungs-Membranabschnitt 36 zweckmäßigerweise ringsum mit radialem Abstand zu dem äußeren Umriss 54 der Grundfläche 38 angeordnet ist.

Wenn der lose Membranabschnitt 55 von dem Membranträger 6 abhebt, entsteht zwischen diesen beiden Komponenten zweckmäßigerweise ein sich ausgehend von dem Befestigungsfortsatz 24 in Richtung zum Umriss 54 etwa keilförmig verbreiternder Spalt 34, der besonders gut in Figuren 4 bis 6, 10 und 11 ersichtlich ist.

Dadurch, dass die Dichtmembran 8 mit Ausnahme an dem Befestigungs-Membranabschnitt 36 an dem Membranträger 6 nicht befestigt ist, sind die sich an den Befestigungs-Membranabschnitt 36 anschließenden Bereiche der Dichtmembran 8, insbesondere der lose Membranabschnitt 55, nicht gezwungen, die Umschaltbewegung 26 des Membranträgers 6 in vollem Umfang mitzumachen, was die Dehnungsbelastung der Dichtmembran 8 reduziert und sich positiv auf die Lebensdauer auswirkt.

Das Membranventil 1 kann so ausgebildet sein, dass lediglich ein Teilbereich des Dichtabschnittes 53 einen Bestandteil des losen Membranabschnittes 55 bildet. Exemplarisch trifft dies auf das Ausführungsbeispiel der Figuren 1 bis 6 zu. Der hier streifenförmig ausgebildete Dichtabschnitt 53a erstreckt sich teils über den Befestigungs-Membranabschnitt 36 und teils über den losen Membranabschnitt 55. Dementsprechend hat der Dichtabschnitt 53 einen von dem Befestigungs-Membranabschnitt 36 gebildeten fixierten Bestandteil 33 und mindestens einen von dem losen Membranabschnitt 55 gebildeten unfixierten Bestandteil 32. Beim Ausführungsbeispiel, bei dem sich der streifenförmige Dichtabschnitt 53a diametral über die Grundfläche 38 hinweg erstreckt, können bei der Umschaltbewegung 26 folglich nur die beiden unfixierten Bestandteile 32 des Dichtabschnittes 53 vom Membranträger 6 wegklappen.

Das Membranventil 1 kann auch so ausgebildet sein, dass der Dichtabschnitt 53 in seiner Gesamtheit ein Bestandteil des losen Membranabschnittes 55 ist. Dies ist bei den Ausführungsbeispielen der Figuren 7 bis 12 der Fall. Der hier ringförmig ausgebildete Dichtabschnitt 53, 53b erstreckt sich mit Querabstand und insbesondere mit radialem Abstand zu dem Befestigungs-Membranabschnitt 36 um diesen Befestigungs-Membranabschnitt 36 herum, so dass er komplett von der Grundfläche 38 des Membranträgers 6 abheben kann, wenn dieser sich bei seiner Umschaltbewegung 26 von dem ringförmigen Ventilsitz 47b entfernt.

Der lose Membranabschnitt 55 enthält zweckmäßigerweise einen, in der Höhenrichtung 16 betrachtet, den äußeren Umriss 54 der Grundfläche 38 ringsum umrahmenden Membran-Außenabschnitt 56, der in den äußeren Randbereich 14 übergeht. Die Ausführungsbeispiele der Figuren 7 bis 12 zeigen eine solche Ausführungsform. Da dieser Membran-Außenabschnitt 56 nicht von dem Membranträger 6 überdeckt ist, erfährt er durch den Membranträger 6 keine Abstützung gegen den in der Ventilkammer 7 herrschenden Fluiddruck. Damit gleichwohl der Membran-Außenabschnitt 56 auch bei hohen Fluiddrücken keine Überbeanspruchung erfährt, ist er an seiner der Ventilkammer 7 abgewandten Oberseite zweckmäßigerweise von einer eine Abstützwirkung bezüglich des Membran-Außenabschnittes 56 entfaltenden Abstützwand 48 des Ventilgehäuses 2 abgedeckt. Die Abstützwand 48 ist vorzugsweise ein Bestandteil des zweiten Gehäuseteils 15. Sie ragt von der dem äußeren Randbereich 14 zugewandten Außenseite her über die Dichtmembran 8 hinweg und erstreckt sich vorzugsweise bis in die unmittelbare Nähe des Membranträgers 6, der zweckmäßigerweise eine Wanddurchbrechung 44 der Abstützwand 48 linear gleitverschieblich durchsetzt.

Die axiale Abstützung des Membran-Außenabschnittes 56 ist ohne Funktionsbeeinträchtigung des Ventilgliedes 3 möglich, weil die Dichtmembran 8 im Bereich des losen Membranabschnittes 55 den notwendigen Bewegungsspielraum aufweist, um die Hubbewegung des Membranträgers 6 einschließlich des zugeordneten Dichtabschnittes 53 zu gewährleisten.

Das Membranventil 1 kann auch so ausgebildet sein, dass sich an den bis zum äußeren Umriss 54 reichenden Bestandteil der Dichtmembran 8 unmittelbar der am Ventilgehäuse 2 fixierte äußere Randbereich 14 anschließt. Dies trifft auf das Ausführungsbeispiel der Figuren 1 bis 6 zu. Hier bedeckt der Membrankörper 5 mit seiner Grundfläche 38 die gesamte Querschnittsfläche der Ventilkammer 7.

Aufgrund der für den losen Membranabschnitt 55 gegebenen Möglichkeit, sich von dem Membranträger 6 abzuheben beziehungsweise von dem Membranträger 6 abzuklappen oder wegzuklappen, besteht die vorteilhafte Möglichkeit, die Dichtmembran 8 insgesamt mit einer ebenen Struktur ohne Auswölbungen zu realisieren. Das beste Beispiel hierfür ist die Bauform der Figuren 1 bis 6, bei der die Dichtmembran 8 mit Ausnahme des Befestigungswulstes 21 eine ebene Gestalt mit im Wesentlichen konstanter Wandstärke aufweist. Gleichwohl kann die Dichtmembran 8, insbesondere im Bereich des äußeren Umrisses 54 des Membranträgers 6, einen bei Betrachtung in der Höhenrichtung 16 bevorzugt ringförmigen Verformungsabschnitt 60 aufweisen, der über mindestens eine Auswölbung verfügt.

Die bei den Ausführungsbeispielen der Figuren 1 bis 11 vorhandenen elektrischen Antriebsmittel 4 enthalten zweckmäßigerweise jeweils eine Federeinrichtung 57, die sich zwischen dem Ventilgehäuse 2 und dem Membranträger 6 abstützt und die ständig derart drückend auf den Membranträger 6 einwirkt, dass selbiger in die oben erwähnte Schließstellung vorgespannt ist. Diese Schließstellung definiert mithin bei beiden Ausführungsbeispielen die Grundstellung des Membranventils 1.

Zum Umschalten in die Offenstellung enthalten die Antriebsmittel 4 insbesondere eine schematisch angedeutete Elektromagneteinrichtung 58, die ein elektromagnetisch antreibbares Antriebsglied 63 enthält, das von einem elektromagnetisch antreibbaren Anker der Elektromagneteinrichtung 58 gebildet ist. Dieser Anker ist bei den Ausführungsbeispielen der Figuren 1 bis 11 in Baueinheit mit dem Membranträger 6 ausgebildet. Bei Aktivierung der Elektromagneteinrichtung 58 wird eine magnetische Stellkraft erzeugt, die den Membranträger 6 unter Überwindung der Rückstellkraft der Federeinrichtung 57 in die Offenstellung bewegt. Die Federeinrichtung 57 ist zweckmäßigerweise ein Bestandteil der Elektromagneteinrichtung 58.

Es versteht sich, dass die Antriebsmittel 4 auch von anderer Bauart als der geschilderten sein können.

Bei dem in Figur 12 abgebildeten Ausführungsbeispiel des Membranventils 1 ist ein einziger Membrankörper 5 funktionell in zwei Dichtmembranen 8 eingeteilt, die jeweils mit einem eigenen Membranträger 6 verbunden sind, so dass sie mit jeweils einem eigenen Ventilsitz 47, 47b kooperieren können.

Beide Membranträger 6 sind hier zweckmäßigerweise stößelartig ausgebildet und parallel zueinander linear bewegbar geführt, wobei sie derart antriebsmäßig miteinander gekoppelt sind, dass sich der eine Membranträger 6 an den ihm zugeordneten Ventilsitz 47, 47b annähert, wenn der andere Membranträger 6 von dem ihm zugeordneten Ventilsitz 47, 47b abgehoben wird. Die antriebsmäßige Kopplung ist insbesondere mittels eines wippenartig verschwenkbaren Betätigungshebels 62 realisierbar, der durch die Antriebsmittel 4 zu einer hin- und hergehenden Schwenkbewegung 65 antreibbar ist und der über zwei Antriebsarme 67, 68 verfügt, die mit jeweils einem der beiden Membranträger 6 kooperieren. Somit wird bei dieser Ausführungsform die Schwenkbewegung 65 des Betätigungshebels 62 in die lineare Umschaltbewegung der beiden Membranträger 6 umgewandelt.

Das Ausführungsbeispiel der Figur 12 unterscheidet sich von demjenigen der Figuren 7 bis 11 insbesondere durch einen zusätzlichen dritten Fluidkanal 45c, der über eine dritte Kanalmündung 46c in die Ventilkammer 7 einmündet, der wie der ersten Kanalmündung 46a ein Ventilsitz 47 zugeordnet ist, bei dem es sich wiederum um einen ringförmigen Ventilsitz 47b handelt. Über jeden dieser beiden Ventilsitze 74b hinweg erstreckt sich eine der beiden in dem einstückigen Membrankörper 5 integrierten Dichtmembranen 8. Außerdem liegt jedem dieser ringförmigen Ventilsitze 47b einer der beiden Membranträger 6 gegenüber, an dem jeweils eine der beiden Dichtmembranen 8, also jeweils ein Membranabschnitt des Membrankörpers 5, in gleicher Weise im Bereich eines Membran-Befestigungsabschnittes 36 befestigt ist wie beim Ausführungsbeispiel der Figuren 7 bis 11. Man kann sagen, dass beim Ausführungsbeispiel der Figur 12 die anhand der Figuren 7 bis 11 beschriebene Funktionseinheit bestehend aus einem Membranträger 6, einer Dichtmembran 8 und einem ringförmigen Ventilsitz 47b doppelt vorhanden ist, wobei mittels des Betätigungshebels 62 in der oben geschilderten Weise eine Betätigung erfolgt und wobei die beiden Dichtmembranen unter bildung des Membrankörpers 5 einstückig miteinander ausgebildet sind.
Somit ist beim Ausführungsbeispiel der Figur 12 der zweite Fluidkanal 45b abwechselnd mit entweder dem ersten Fluidkanal 45a oder dem dritten Fluidkanal 45c verbindbar und gleichzeitig vom jeweils anderen Fluidkanal 45c bzw. 45a abtrennbar. Die Antriebsmittel 4 enthalten auch beim Ausführungsbeispiel der Figur 12 elektrisch betätigbare Antriebsmittel 4, die zweckmäßigerweise eine schematisch angedeutete Elektromagneteinrichtung 58 mit einem elektromagnetisch antreibbares Antriebsglied 63 enthalten. Das Antriebsglied 63 übt eine die Schwenkbewegung 65 hervorrufende Antriebskraft auf den Betätigungshebel 62 aus, wobei es zweckmäßigerweise eine rückstellend wirkende Kraft einer Federeinrichtung 57 zu überwinden hat.
Bei 66 sind Schwenklagermittel ersichtlich, durch die der Betätigungshebel 62 bezüglich des Ventilgehäuses 2 zur Ermöglichung der Schwenkbewegung 65 verschwenkbar gelagert ist.
Im Übrigen sind in der Figur 12 Komponenten, die denjenigen des Ausführungsbeispiels der Figuren 7 bis 11 entsprechen, mit den gleichen Bezugszeichen wie in den Figuren 7 bis 11 versehen und auch die zu den Figuren 7 bis 11 gemachten Ausführungen gelten insofern für das Ausführungsbeispiel der Figur 12 entsprechend.
Abweichend von dem vorgenannten Ausführungsbeispiel können ein oder zwei Membranträger 6 auch feste Bestandteile eines insgesamt wippenartig verschwenkbaren Betätigungselementes sein.

Bei den Ausführungsbeispielen ist der Membranträger 6 einstückig ausgebildet. Hiervon abweichend ist aber auch ein mehrteiliger und insbesondere zweiteiliger Aufbau möglich. So kann die Dichtmembran 8 beispielsweise derart an einem mehrteiligen Membranträger montiert werden, dass sie in den Membranträger eingeschoben wird und danach mit einer Hülse fixiert wird, die gleichzeitig ein Lagerungsmittel für eine zur schwenkbaren Lagerung des Membranträgers dienende Achswelle bildet. Die Dichtmembran 8 oder der Membrankörper 5 kann auch zwischen zwei Teilen des Membranträgers 6 durch Klemmung fixiert sein.

## Patentansprüche

1. Membranventil, mit einem Ventilgehäuse (2) und mindestens einem diesbezüglich beweglichen Ventilglied (3), wobei das Ventilglied (3) über einen unter Ausführung einer Umschaltbewegung (26) relativ zum Ventilgehäuse (2) bewegbaren Membranträger (6) und über eine gemeinsam mit dem Ventilgehäuse (2) eine Ventilkammer (7) begrenzende flexible Dichtmembran (8) verfügt, wobei die Dichtmembran (8) an ihrem äußeren Randbereich (14) unter Abdichtung an dem Ventilgehäuse (2) fixiert ist und einen mit Abstand dazu an dem Membranträger (6) befestigten und dessen Umschaltbewegung (26) mitmachenden Befestigungs-Membranabschnitt (36) aufweist, wobei in der Ventilkammer (7) ein der Dichtmembran (8) zugewandter Ventilsitz (47) angeordnet ist, an den ein zumindest partiell von einer der Ventilkammer (7) zugewandten Grundfläche (38) des Membranträgers (6) abgestützter Dichtabschnitt (53) der Dichtmembran (8) dichtend andrückbar ist, um wenigstens zwei in die Ventilkammer (7) einmündende Fluidkanäle (45, 45a, 45b) voneinander abzutrennen, wobei das Membranventil (1) einen Membrankörper (5) enthält, der funktionell in zwei Dichtmembranen (8) eingeteilt ist, die jeweils mit einem eigenen Membranträger (6) verbunden sind und die mit jeweils einem eigenen Ventilsitz (47) kooperieren können, wobei die beiden Membranträger (6) stößelartig ausgebildet und unter Ausführung einer linearen Umschaltbewegung (26) parallel zueinander linear bewegbar sind und wobei die beiden Membranträger (6) außerdem mittels eines wippenartig verschwenkbaren Betätigungshebels (62) derart antriebsmäßig miteinander gekoppelt sind, dass sich der eine Membranträger (6) an den ihm zugeordneten Ventilsitz (47) annähert, wenn der andere Membranträger (6) von dem ihm zugeordneten Ventilsitz (47) abgehoben wird, wobei der Betätigungshebel (62) durch elektrisch betätigbare Antriebsmittel (4) des Membranventils (1) zu einer hin- und hergehenden Schwenkbewegung (65) antreibbar ist und über zwei Antriebsarme (67, 68) verfügt, die mit jeweils einem der beiden Membranträger (6) kooperieren, sodass die Schwenkbewegung (65) des Betätigungshebels (62) in die lineare Umschaltbewegung (26) der beiden Membranträger (6) umgewandelt wird, **dadurch gekennzeichnet, dass** der Dichtabschnitt (53) zumindest partiell Bestandteil eines losen Membranabschnittes der Dichtmembran (8) ist, der sich, ohne am Membranträger (6) befestigt zu sein, ausgehend von dem Befestigungs-Membranabschnitt (36) bis zu dem am Ventilgehäuse (2) fixierten äußeren Randbereich (14) der Dichtmembran (8) erstreckt, so dass er von der Grundfläche (38) des Membranträgers (6) abhebt, wenn der Membranträger (6) sich bei seiner Umschaltbewegung (26) von dem Ventilsitz (47) entfernt.

2. Membranventil nach Anspruch 1, **dadurch gekennzeichnet, dass** der Membranträger (6) eine die Grundfläche (38) bildende Stirnfläche aufweist.

3. Membranventil nach Anspruch 2, **dadurch gekennzeichnet, dass** der Befestigungs-Membranabschnitt (36) im Bereich der Grundfläche (38) des Membranträgers (6) mit allseitigem radialem Abstand zum äußeren Umriss (54) der Grundfläche (38) innerhalb dieses Umrisses (54) angeordnet ist, wobei er sich zweckmäßigerweise im zentralen Bereich der Grundfläche (38) befindet.

4. Membranventil nach einem der Ansprüche 1 bis 3, **dadurch gekennzeichnet, dass** der lose Membranabschnitt (55) den Befestigungs-Membranabschnitt (36) in einem von der Grundfläche (38) überdeckten Bereich ringsum umrahmt.

5. Membranventil nach einem der Ansprüche 1 bis 4, **dadurch gekennzeichnet, dass** der Ventilsitz (47, 47b) in einer die Kanalmündung (46b) eines Fluidkanals (45b) umrahmenden Weise ringförmig in sich geschlossen ausgebildet ist, wobei der zugeordnete Dichtabschnitt (53, 53b) der Dichtmembran (8) ebenfalls ringförmig ausgebildet ist und zumindest zum Teil zu dem losen Membranabschnitt (55) gehört.

6. Membranventil nach Anspruch 5, **dadurch gekennzeichnet, dass** der ringförmige Dichtabschnitt (53, 53b) in seiner Gesamtheit ein Bestandteil des losen Membranabschnittes (55) ist, so dass er komplett von der Grundfläche (38) des Membranträgers (6) abheben kann, wenn dieser sich bei seiner Umschaltbewegung (26) von dem Ventilsitz (47, 47b) entfernt.

7. Membranventil nach einem der Ansprüche 1 bis 4, **dadurch gekennzeichnet, dass** der Ventilsitz (47, 47a) in einer sich zwischen zwei seitlichen Wandabschnitten (22a, 22b) der Ventilkammer (7) erstreckenden und die Ventilkammer (7) in zwei Kammerabschnitte (52a, 52b) unterteilenden Weise stegartig ausgebildet ist, wobei der zugeordnete Dichtabschnitt (53, 53a) streifenförmig ausgebildet ist und zumindest zum Teil zu dem losen Membranabschnitt (55) gehört.

8. Membranventil nach Anspruch 7, **dadurch gekennzeichnet, dass** der Dichtabschnitt (53) teilweise von dem Befestigungs-Membranabschnitt (36) gebildet ist, so dass er nur partiell von der Grundfläche (38) des Membranträgers (6) abheben kann, wenn dieser sich bei seiner Umschaltbewegung (26) von dem Ventilsitz (47) entfernt, wobei der Befestigungs-Membranabschnitt (36) zweckmäßigerweise zwischen zwei von dem Membranträger (6) abhebbaren Bestandteilen (32) des Dichtabschnittes (53) angeordnet ist.

9. Membranventil nach einem der Ansprüche 1 bis 8, **dadurch gekennzeichnet, dass** die Dichtmembran (8) an dem Membranträger (6) ausschließlich in dessen Innern befestigt ist.

10. Membranventil nach einem der Ansprüche 1 bis 9, **dadurch gekennzeichnet, dass** die Dichtmembran (8) Bestandteil eines einstückigen Membrankörpers (5) ist, der im Bereich des Befestigungs-Membranabschnittes (36) mindestens einen ausgehend von der Grundfläche (38) in den Membranträger (6) eingreifenden Befestigungsfortsatz (24) aufweist.

11. Membranventil nach einem der Ansprüche 1 bis 10, **dadurch gekennzeichnet, dass** der lose Membranabschnitt (55) der Dichtmembran (8) rings um die Grundfläche (38) des Membranträgers (6) herum über den äußeren Umriss (54) der Grundfläche (38) hinausragt und einen die Grundfläche (38) außen umrahmenden Membran-Außenabschnitt (56) aufweist, der in den am Ventilgehäuse (2) fixierten äußeren Randbereich (14) übergeht.

12. Membranventil nach Anspruch 11, **dadurch gekennzeichnet, dass** der Membran-Außenabschnitt (56) der Dichtmembran (8) an seiner der Ventilkammer (7) abgewandten Oberseite von einer Abstützwand (48) des Ventilgehäuses (2) abgedeckt und abstützbar ist, die sich zweckmäßigerweise bis zu dem Membranträger (6) hin erstreckt.

13. Membranventil nach einem der Ansprüche 1 bis 12, **dadurch gekennzeichnet, dass** die Ventilkammer (7) und die Dichtmembran (8) jeweils einen runden oder einen länglichen, an den Schmalseiten bevorzugt abgerundeten Umriss haben.

14. Membranventil nach einem der Ansprüche 1 bis 13, **dadurch gekennzeichnet, dass** in die Ventilkammer (7) drei Fluidkanäle (45) einmünden, von denen zwei Fluidkanälen (45, 45a, 45c) jeweils einer von zwei ringförmigen Ventilsitzen (47, 47b) zugeordnet ist, die jeweils mit einer der beiden als integraler Bestandteil des einstückigen Membrankörpers (5) ausgebildeten Dichtmanschetten (8) kooperieren.

15. Membranventil nach einem der Ansprüche 1 bis 14, **dadurch gekennzeichnet, dass** der Ventilsitz (47, 47b) in einer die Kanalmündung (46b, 46c) eines Fluidkanals (45b, 45c) umrahmenden Weise ringförmig in sich geschlossen ausgebildet ist, wobei der zugeordnete Dichtabschnitt (53, 53b) der Dichtmembran (8) ebenfalls ringförmig ausgebildet ist und ein Bestandteil des losen Membranabschnittes (55) ist, so dass er komplett von der Grundfläche (38) des Membranträgers (6) abheben kann wenn dieser sich bei seiner Umschaltbewegung (26) von dem Ventilsitz (47, 47b) entfernt, wobei die Dichtmembran (8) Bestandteil eines einstückigen Membrankörpers (5) ist, der im Bereich des Befestigungs-Membranabschnittes (36) mindestens einen ausgehend von der Grundfläche (38) in den Membranträger (6) eingreifenden Befestigungsfortsatz (24) aufweist und wobei sowohl die Ventilkammer (7) als auch der Membrankörper einen länglichen, an den Schmalseiten abgerundeten Umriss haben.

## Claims

1. Diaphragm valve, comprising a valve housing (2) and at least one valve member (3) which is movable relative thereto, wherein the valve member (3) has a diaphragm support (6), which is movable relative to the valve housing (2) while performing a switch-over movement (26), and a flexible sealing diaphragm (8), which bounds a valve chamber (7) together with the valve housing (2), wherein the sealing diaphragm (8) is fixed to the valve housing (2) in its outer edge region (14) while forming a seal and comprises a fastening diaphragm section (36), which is secured to the diaphragm support (6) at a distance therefrom and participates in its switch-over movement (26), wherein in the valve chamber (7) there is located a valve seat (47), which faces the sealing diaphragm (8) and against which a sealing section (53) of the sealing diaphragm (8), which is at least partially supported by a base surface (38) - facing the valve chamber (7) - of the diaphragm support (6), can be pressed to form a seal in order to disconnect at least two fluid passages (45, 45a, 45b) terminating into the valve chamber (7) from one another, wherein the diaphragm valve (1) contains a diaphragm body (5), which is functionally divided into two sealing diaphragms (8), each of which is joined to its own diaphragm support (6) and capable of cooperating with its own valve seat (47), wherein the two diaphragm supports (6) are designed in the manner of plungers and movable in a linear motion parallel to each other while performing a linear switch-over movement (26), and wherein the two diaphragm supports (6) are furthermore drive-coupled to each other by means of an actuating lever (62) pivotable in the manner of a rocker in such a way that the one diaphragm support (6) approaches the associated valve seat (47) if the other diaphragm support (6) is lifted off the associated valve seat (47), wherein the actuating lever (62) can be driven to perform a reciprocating pivoting movement by electrically actuable drive means (4) of the diaphragm valve (1) and has two drive arms (67, 68), each of which cooperates with one of the two diaphragm supports (6), so that the pivoting movement of the actuating lever (62) is converted into the linear switch-over movement (26) of the two diaphragm supports (6), **characterised in that** the sealing section (53) is at least partially a part of a loose diaphragm section of the sealing diaphragm (8), which diaphragm section extends, without being secured to the diaphragm support (6), from the fastening diaphragm section (36) to the outer edge region (14) - fixed to the valve housing (2) - of the sealing diaphragm (8), so that it lifts off the base surface (38) of the diaphragm support (6) if the diaphragm support (6) moves away from the valve seat (47) in its switch-over movement (26).

2. Diaphragm valve according to claim 1, **characterised in that** the diaphragm support (6) has an end face which forms the base surface (38).

3. Diaphragm valve according to claim 2, **characterised in that** the fastening diaphragm section (36) is, in the region of the base surface (38) of the diaphragm support (6), located within the external contour (54) of the base surface (38) at an all-round radial distance from said contour (54), being expediently located in the central region of the base surface (38).

4. Diaphragm valve according to any of claims 1 to 3, **characterised in that** the loose diaphragm section (55) frames the fastening diaphragm section (36) all round in a region covered by the base surface (38).

5. Diaphragm valve according to any of claims 1 to 4, **characterised in that** the valve seat (47, 47b) is designed to be annular and coherent in a manner which frames the passage outlet (46b) of a fluid passage (45b), the associated sealing section (53, 53b) of the sealing diaphragm (8) being likewise annular and belonging at least partially to the loose diaphragm section (55).

6. Diaphragm valve according to claim 5, **characterised in that** the annular sealing section (53, 53b) is in its entirety a part of the loose diaphragm section (55), so that it can completely lift off the base surface (38) of the diaphragm support (6), if the latter moves away from the valve seat (47, 47b) in its switch-over movement (26).

7. Diaphragm valve according to any of claims 1 to 4, **characterised in that** the valve seat (47, 47a) is designed in the manner of a web which extends between two lateral wall sections (22a, 22b) of the valve chamber (7) and divides the valve chamber (7) into two chamber sections (52a, 52b), the associated sealing section (53, 53a) being strip-shaped and belonging at least partially to the loose diaphragm section (55).

8. Diaphragm valve according to claim 7, **characterised in that** the sealing section (53) is partly formed by the fastening diaphragm section (36), so that it can only partially lift off the base surface (38) of the diaphragm support (6), if the latter moves away from the valve seat (47) in its switch-over movement (26), the fastening diaphragm section (36) being expediently located between two parts (32) of the sealing section (53) which can be lifted off the diaphragm support (6).

9. Diaphragm valve according to any of claims 1 to 8, **characterised in that** the sealing diaphragm (8) is exclusively secured to the diaphragm support (6) in the interior thereof.

10. Diaphragm valve according to any of claims 1 to 9, **characterised in that** the sealing diaphragm (8) is a part of a one-piece diaphragm body (5), which has at least one fastening extension (24) engaging with the diaphragm support (6) starting from the base surface (38) in the region of the fastening diaphragm section (36).

11. Diaphragm valve according to any of claims 1 to 10, **characterised in that** the loose diaphragm section (55) of the sealing diaphragm (8) projects beyond the external contour (54) of the base surface (38) all around the base surface (38) of the diaphragm support (6) and has a diaphragm outer section (56), which frames the base surface (38) on the outside and merges into the outer edge region (14) fixed to the valve housing (2).

12. Diaphragm valve according to claim 11, **characterised in that** the diaphragm outer section (56) of the sealing diaphragm (8) is on its top side remote from the valve chamber (2) covered and supportable by a supporting wall (48) of the valve housing (2), which supporting wall (48) expediently extends to the diaphragm support (6).

13. Diaphragm valve according to any of claims 1 to 12, **characterised in that** the valve chamber (7) and the sealing diaphragm (8) have a round contour or an oblong contour which is preferably rounded at the narrow sides.

14. Diaphragm valve according to any of claims 1 to 13, **characterised in that** three fluid passages (45) terminate into the valve chamber (7), of which each of two fluid passages (45, 45a, 45c) is assigned to one of two annular valve seats (47, 47b), each of which cooperates with one of the two sealing sleeves (8) designed as integral parts of the one-piece diaphragm body (5).

15. Diaphragm valve according to any of claims 1 to 14, **characterised in that** the valve seat (47, 47b) is designed to be annular and coherent in a manner which frames the passage outlet (46b, 46c) of a fluid passage (45b, 45c), the associated sealing section (53, 53b) of the sealing diaphragm (8) being likewise annular and a part of the loose diaphragm section (55), so that it can completely lift off the base surface (38) of the diaphragm support (6), if the latter moves away from the valve seat (47, 47b) in its switch-over movement (26), wherein the sealing diaphragm (8) is a part of a one-piece diaphragm body (5), which has at least one fastening extension (24) engaging with the diaphragm support (6) starting from the base surface (38) in the region of the fastening diaphragm section (36), and wherein both the valve chamber (7) and the diaphragm body have an oblong contour which is rounded at the narrow sides.

## Revendications

1. Soupape à membrane, avec un carter de soupape (2) et au moins un organe de soupape (3) mobile par rapport à ce dernier, dans laquelle l'organe de soupape (3) dispose d'un support de membrane (6) pouvant être déplacé par rapport au carter de soupape (2) en exécutant un déplacement de commutation (26) et d'une membrane d'étanchéité (8) flexible délimitant conjointement avec le carter de soupape (2) une chambre de soupape (7), dans laquelle la membrane d'étanchéité (8) est fixée, au niveau de sa zone de bord (14) extérieure, au niveau du carter de soupape (2) moyennant une étanchéification et présente une section de membrane d'attache (36) attachée à distance au niveau du support de membrane (6) et accompagnant le déplacement de commutation (26) dudit support de membrane, dans laquelle un siège de soupape (47) tourné vers la membrane d'étanchéité (8) est disposé dans la chambre de soupape (7), au niveau duquel siège de soupape une section étanche (53) de la membrane d'étanchéité (8) soutenue au moins en partie par une surface de base (38), tournée vers la chambre de soupape (7), du support de membrane (6) peut être appuyée de manière à assurer l'étanchéité afin de séparer les uns des autres au moins deux canaux de fluide (45, 45a, 45b) débouchant dans la chambre de soupape (7), dans laquelle la soupape à membrane (1) contient un corps de membrane (5), qui est divisé de manière fonctionnelle en deux membranes d'étanchéité (8), qui sont reliées respectivement à un support de membrane (6) propre et qui peuvent coopérer avec respectivement un siège de soupape (47) propre, dans laquelle les deux supports de membrane (6) sont réalisés à la manière d'un poussoir et peuvent être déplacés linéairement de manière parallèle l'un par rapport à l'autre en exécutant un déplacement de commutation (26) linéaire et dans laquelle les deux supports de membrane (6) sont couplés l'un à l'autre par ailleurs en entraînement au moyen d'un levier d'actionnement (62) pouvant pivoter à la manière d'une bascule de telle manière que l'au moins un support de membrane (6) se rapproche du siège de soupape (47) qui lui est associé quand l'autre support de membrane (6) est détaché du siège de soupape (47) qui lui est associé, dans laquelle le levier d'actionnement (62) peut être entraîné par des moyens d'entraînement (4) de la soupape à membrane (1) pouvant être actionnés de manière électrique pour effectuer un déplacement par pivotement (65) en va-et-vient et dispose de deux bras d'entraînement (67, 68), qui coopèrent avec respectivement un des deux supports de membrane (6) si bien que le déplacement par pivotement (65) du levier d'actionnement (62) est converti en le déplacement de commutation (26) linéaire des deux supports de membrane (6), **caractérisée en ce que** la section étanche (53) fait partie intégrante au moins en partie d'une section de membrane lâche de la membrane d'étanchéité (8), qui s'étend, sans avoir à être attachée au niveau du support de membrane (6), en partant de la section de membrane d'attache (36) jusqu'à la zone de bord (14) extérieure, fixée au niveau du carter de soupape (2), de la membrane d'étanchéité (8) de sorte qu'elle se détache de la surface de base (38) du support de membrane (6) quand le support de membrane (6) s'éloigne du siège de soupape (47) lors de son déplacement de commutation (26).

2. Soupape à membrane selon la revendication 1, **caractérisée en ce que** le support de membrane (6) présente une surface frontale formant la surface de base (38).

3. Soupape à membrane selon la revendication 2, **caractérisée en ce que** la section de membrane d'attache (36) est disposée dans la zone de la surface de base (38) du support de membrane (6) à une distance radiale de toutes parts par rapport au contour (54) extérieur de la surface de base (38) à l'intérieur dudit contour (54), dans laquelle elle se trouve de manière appropriée dans la zone centrale de la surface de base (38).

4. Soupape à membrane selon l'une quelconque des revendications 1 à 3, **caractérisée en ce que** la section de membrane (55) lâche encadre tout autour la section de membrane d'attache (36) dans une zone recouverte par la surface de base (38).

5. Soupape à membrane selon l'une quelconque des revendications 1 à 4, **caractérisée en ce que** le siège de soupape (47, 47b) est réalisé de manière fermée sur lui de manière à présenter une forme annulaire d'une manière encadrant l'embouchure de canal (46b) d'un canal de fluide (45b), dans laquelle la section étanche (53, 53b) associée de la membrane d'étanchéité (8) est réalisée également de manière à présenter une forme annulaire et fait partie au moins de la section de membrane (55) lâche.

6. Soupape à membrane selon la revendication 5, **caractérisée en ce que** la section étanche (53, 53b) de forme annulaire fait partie intégrante dans son ensemble de la section de membrane (55) lâche de sorte qu'elle peut se détacher totalement de la surface de base (38) du support de membrane (6) quand ce dernier s'éloigne du siège de soupape (47, 47b) lors de son déplacement de commutation (26).

7. Soupape à membrane selon l'une quelconque des revendications 1 à 4, **caractérisée en ce que** le siège de soupape (47, 47a) est réalisé à la manière d'une entretoise de manière à s'étendre entre deux sections de paroi (22a, 22b) latérales de la chambre de soupape (7) et à diviser la chambre de soupape (7) en deux sections de chambre (52a, 52b), dans laquelle la section étanche (53, 53a) associée est réalisée de manière à présenter une forme de bande et fait partie au moins de la section de membrane (55) lâche.

8. Soupape à membrane selon la revendication 7, **caractérisée en ce que** la section étanche (53) est formée en partie par la section de membrane d'attache (36) de sorte qu'elle peut se détacher seulement en partie de la surface de base (38) du support de membrane (6) quand ce dernier s'éloigne du siège de soupape (47) lors de son déplacement de commutation (26), dans laquelle la section de membrane d'attache (36) est disposée de manière appropriée entre deux parties constitutives (32), pouvant être détachées du support de membrane (6), de la section étanche (53).

9. Soupape à membrane selon l'une quelconque des revendications 1 à 8, **caractérisée en ce que** la membrane d'étanchéité (8) est attachée au niveau du support de membrane (6) exclusivement dans son espace intérieur.

10. Soupape à membrane selon l'une quelconque des revendications 1 à 9, **caractérisée en ce que** la membrane d'étanchéité (8) fait partie intégrante d'un corps de membrane (5) d'un seul tenant, qui présente, dans la zone de la section de membrane d'attache (36), au moins un prolongement d'attache (24) venant en prise avec le support de membrane (6) en partant de la surface de base (38).

11. Soupape à membrane selon l'une quelconque des revendications 1 à 10, **caractérisée en ce que** la section de membrane (55) lâche de la membrane d'étanchéité (8) tout autour de la surface de base (38) du support de membrane (6) dépasse du contour (54) extérieur de la surface de base (38) et présente une section extérieure de membrane (56) encadrant côté extérieur la surface de base (38), laquelle section extérieure de membrane devient la zone de bord (14) extérieure fixée au niveau du carter de soupape (2).

12. Soupape à membrane selon la revendication 11, **caractérisée en ce que** la section extérieure de membrane (56) de la membrane d'étanchéité (8) est recouverte et peut être soutenue par une paroi d'appui (48) du carter de soupape (2) au niveau de son côté supérieur opposé à la chambre de soupape (7), laquelle paroi d'appui s'étend de manière appropriée jusqu'au support de membrane (6).

13. Soupape à membrane selon l'une quelconque des revendications 1 à 12, **caractérisée en ce que** la chambre de soupape (7) et la membrane d'étanchéité (8) ont respectivement un contour rond ou un contour oblong, arrondi de manière préférée au niveau des côtés étroits.

14. Soupape à membrane selon l'une quelconque des revendications 1 à 13, **caractérisée en ce que** débouchent dans la chambre de soupape (7) trois canaux de fluide (45), respectivement un des deux sièges de soupape (47, 47b) de forme annulaire étant associé à deux des canaux de fluide (45, 45a, 45c), lesquels coopèrent respectivement avec une des deux garnitures étanches (8) réalisées en tant que partie constitutive intégrante du corps de membrane (5) d'un seul tenant.

15. Soupape à membrane selon l'une quelconque des revendications 1 à 14, **caractérisée en ce que** le siège de soupape (47, 47b) est réalisé de manière fermée sur lui de manière à présenter une forme annulaire de manière à encadrer l'embouchure de canal (46b, 46c) d'un canal de fluide (45b, 45c), dans laquelle la section étanche (53, 53b) associée de la membrane d'étanchéité (8) est réalisée également de manière à présenter une forme annulaire et fait partie intégrante de la section de membrane (55) lâche de sorte qu'elle peut se détacher totalement de la surface de base (38) du support de membrane (6) quand ce dernier s'éloigne du siège de soupape (47, 47b) lors de son déplacement de commutation (26), dans laquelle la membrane d'étanchéité (8) fait partie intégrante d'un corps de membrane (5) d'un seul tenant, qui présente, dans la zone de la section de membrane d'attache (36), au moins un prolongement d'attache (24) venant en prise avec le support de membrane (6) en partant de la surface de base (38) et dans laquelle à la fois la chambre de soupape (7) et le corps de membrane ont un contour oblong, arrondi au niveau des côtés étroits.
